# EUROPEAN PATENT APPLICATION

(11) **EP 1 442 973 A2**
(43) Date of publication of application: **04.08.2004**
(21) Application number: 03003869.9
(22) Date of filing: 20.02.2003
(51) Int. Cl.: B62M 3/00

(54) **Pedal crank for bicycles**

(30) Priority: 29.01.2003 IT MI20030142
(71) Applicant: NOVEK di PIERA TERRANEO CAPPELLETTI & C. S.n.c., 22060 Cucciago, (Como) (IT)
(72) Inventor: Terraneo, Piera, 22060 Cucciago, (Como) (IT)
(74) Representative: Cicogna, Franco

(57) **Abstract**

The present invention relates to a highly efficient pedal crank for bicycles, comprising an elongated body defining, at one end portion thereof, coupling means for coupling the pedal crank to a central drive hub and, at the other end thereof, fixing means for fixing the elongated body to a pedal supporting pin.

The main feature of the invention is that the elongated body comprises moreover, at said first end portion thereof, an attachment portion extending on the opposite part of the hub, with respect to the other end portion of the pedal crank.

## Description

### BACKGROUND OF THE INVENTION

The present invention relates to a highly efficient pedal crank for bicycles in general.

As is known, bicycle pedal cranks are conventionally made of a bar which coupled, usually through key coupling means, to a bicycle hub and, at the other end portion thereof, said bar being coupled to the pedal supporting pivot pin.

These pedal cranks are designed for transmitting to the bicycle central gear a torque which directly depends of the effort applied by the cyclist, and on the lever arm existing between the hub and the force applying point.

Thus, from a practical standpoint, for increasing the torque, the effort being the same, it would be sufficient to increase the length of the pedal crank arm.

This approach, however, cannot be validly applied for a lot of reasons, 'the most important of which is that an increase of the pedal crank arm would cause an increase of the rotary movement to be provided by the cyclist leg.

Moreover, it would not be possible to increase the length of the pedal crank beyond set values, since the pedal would be excessively near the ground during the normal operation of the bicycle.

This would cause great problems.

To overcome the above problems, telescopic pedal cranks designed for increasing the length of the pedal during the active portion of the operation of the pedal in which an effort is exerted thereon, have been already designed.

However, prior approaches have been found very complex from a mechanical standpoint, and have not been found as practically useful.

### SUMMARY OF THE INVENTION

Accordingly, the aim of the present invention is to solve the above mentioned problem, by providing a highly efficient pedal crank for bicycles in general, adapted to improve the useful effort exerted during the pedalling, while allowing to provide, the pedalling effort being the same, an improved operating torque or, the operating torque being the same, to provide a reduction of the applied effort.

Within the scope of the above mentioned aim, a main object of the present invention is to provide such a pedal crank for bicycles in general, the pedal of which can be coupled to the hub in a very simple manner, by using conventional coupling means, without the requirement of performing great modifications in the pedal crank construction.

Yet another object of the present invention is to provide such a pedal crank for bicycles in general which, owing to its specifically designed constructional features, is very reliable and safe in operation.

Yet another object of the present invention is to provide such an highly efficient pedal crank which can be easily made starting from easily available materials and elements and which, moreover, is very competitive from a mere economic standpoint.

According to one aspect of the present invention, the above mentioned aim and objects, as well as yet other objects, which will become more apparent hereinafter, are achieved by a highly efficient pedal crank for bicycles in general, said pedal crank comprising an elongated body defining, at a first end portion thereof, coupling means 'for coupling said pedal crank to a hub of a central drive assembly and, at another end portion thereof, fixing means for coupling said pedal crank to a pedal support element, and being characterized in that said elongated body further comprises, at said first end portion thereof, an attachment portion extending on a side of said hub opposite to said other end portion thereof.

### BRIEF DESCRIPTION OF THE DRAWINGS

Further characteristics and advantages of the present invention will become more apparent hereinafter from the following detailed disclosure of a preferred, though not exclusive, embodiment of a highly efficient pedal crank for bicycles in general, which is illustrated, by way of an indicative, but not limitative, example in the accompanying drawings, where:
Figure 1 schematically illustrates a pedal crank according to the present invention and, in this figure, by a dashed line, has been further shown the arrangement of a prior conventional pedal crank;
Figure 2 is an elevation view illustrating the arrangement on a central drive of the two pedal cranks, which are typically arranged with an opposite type of arrangement;
Figure 3 shows the pedal cranks as applied to a bicycle, as seen in a top plan view; and
Figure 4 is a schematic perspective view illustrating a portion of the bicycle provided with the pedal cranks according to the invention.

### DESCRIPTION OF THE PREFERRED EMBODIMENTS

With reference to the number references of the above mentioned figures, the highly efficient pedal crank for bicycles in general, according to the present invention, which has been generally indicated by the reference number 1, comprises an elongated body 2, which is made of conventionally used materials, such as light alloys or the like.

The elongated body 2, in particular, comprises, at a first end portion 3 thereof, coupling means for coupling said elongated body to the hub of a central drive unit 4.

Said coupling means, for example, comprise a hole 5, having a square cross section, or other coupling systems allowing to provide a conventional coupling between the pedal crank and the central drive.

At the other end portion thereof, the elongated body 2 comprises fixing means for fixing it to the supporting pivot pin 10 of a pedal, said fixing means typically comprising a conventional threaded hole 11.

A main feature of the present invention is that the body 2 further comprises an attachment portion 20, extending from the first end portion thereof coupled to the hub 4 and extending on the opposite side with respect to the second end portion thereof.

According to a preferred embodiment of the invention, the attachment portion 20 has a substantially semicircular arrangement and, therefrom, a rectilinear portion further extends.

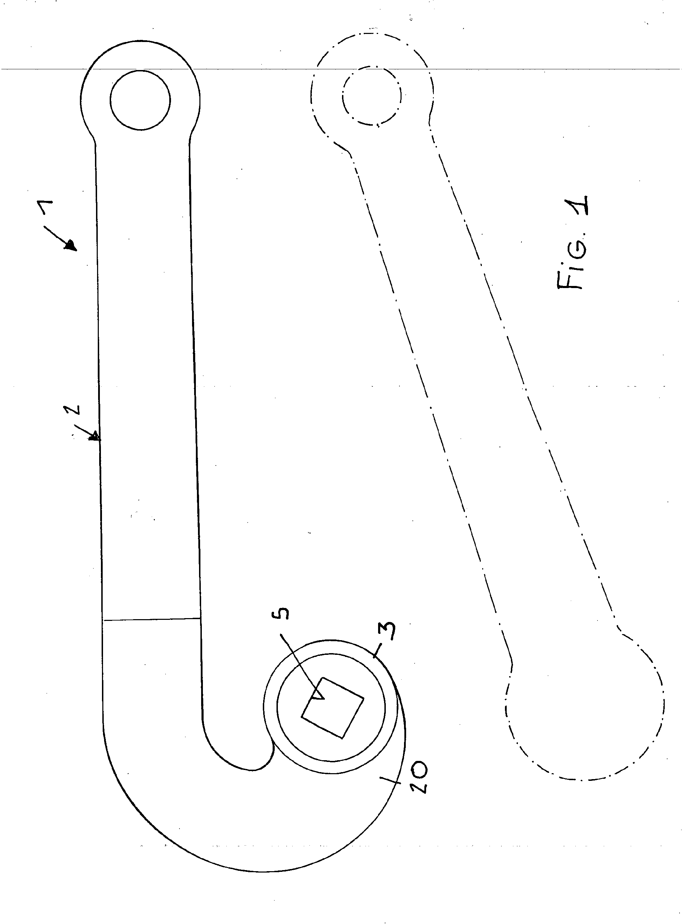

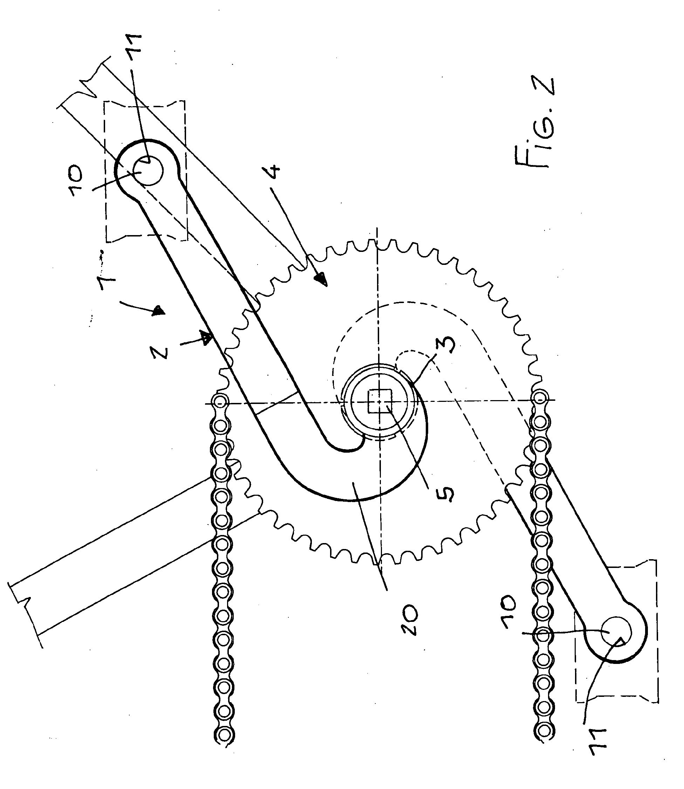

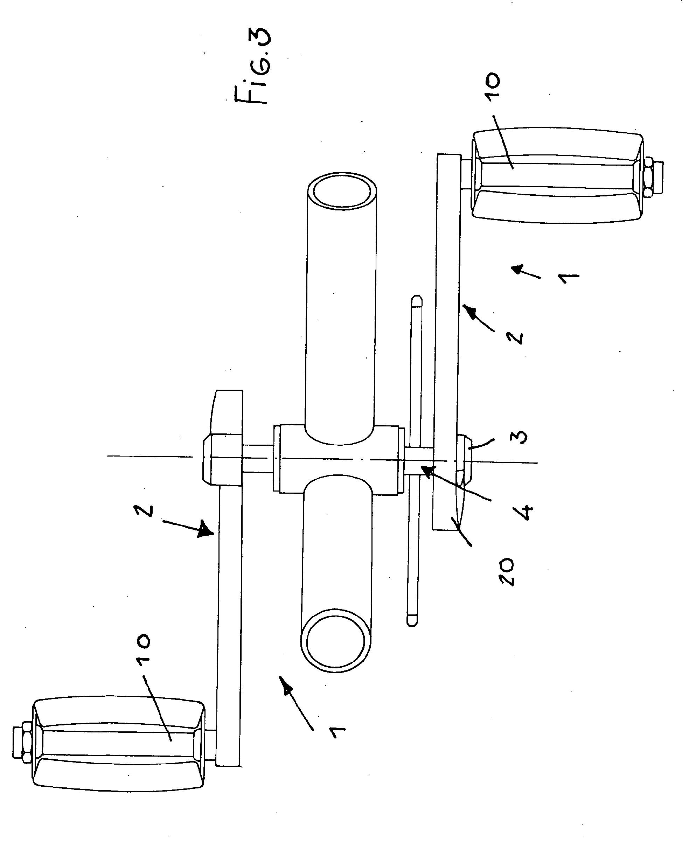

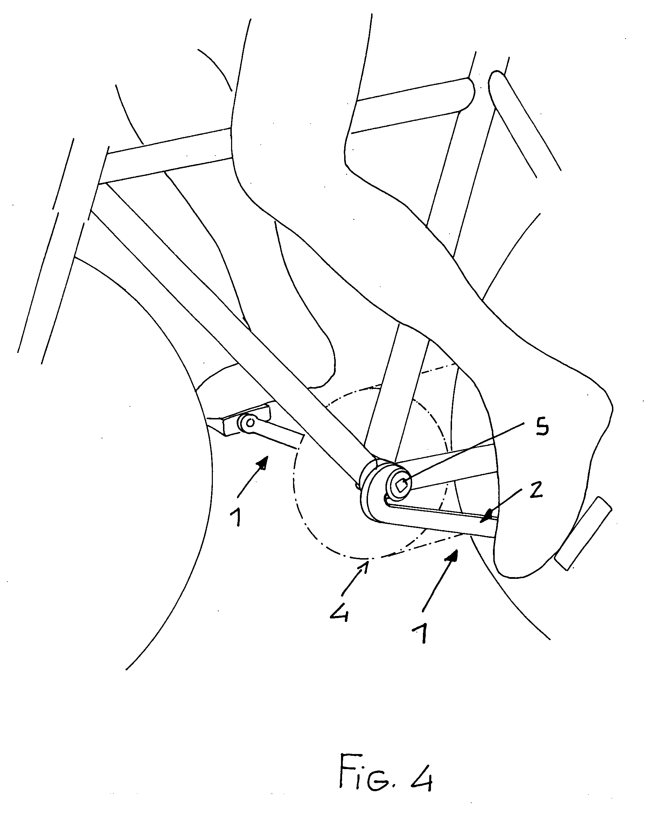

Such a coupling, in actual practice, allows the cyclist effort to be properly transmitted to the central drive, from the opposite side of a conventional rectilinear pedal crank, as indicated by the dashed lines in figure 1.

Thus, substantially, the effort will be applied on the rear portion of the central drive hub, considering that, typically, the active part of the pushing effort will be provided during the pedal lowering operating step.

Actually, during this operating step, the pedal will be arranged on the front of the central drive.

Such a different application causes the pedalling effort to be applied to the drive on the opposite portion of the gear engaging the bicycle chain, thereby allowing the pedalling effort to be better distributed, with the consequent great advantages obtained thereby.

The used arrangement will be that considered as optimum from a functional standpoint, but, of course, it would be also possible to use different arrangements, provided that the attachment portion extends from the hub on the opposite side with respect to the pedal coupling end portion.

Thus, the disclosed arrangement allows to increase the torque' which can be obtained, the pedalling effort being the same, or to reduce the effort, the torque being the same, thereby allowing to greatly reduce the pedalling strain by the cyclist.

In this connection it is to be further added that yet another greater advantage of the pedal crank according to the present invention is that it can be easily used for replacing prior pedal cranks, without requiring great modifications to the bicycle.

The invention, as disclosed, is susceptible to several modifications and variations, all of which will come within the scope of the invention.

Moreover, all the constructional details can be replaced by other technically equivalent elements.

In practicing the invention, the used materials, as well as the contingent size and shapes, can be any, depending on requirements.

## Claims

1. A highly efficient pedal crank for bicycles in general, comprising an elongated body defining, at a first end portion thereof, coupling means for coupling said pedal crank to a hub of a central drive and, at 'another end portion thereof, fixing means for fixing said pedal crank to a pedal supporting pivot pin, **characterized in that** said elongated body further comprises, at said first end portion thereof, an attachment portion extending on the side of said hub opposite to said other end portion thereof.

2. A pedal crank for bicycles, according to the preceding claim, **characterized in that** said attachment portion extends according to a curvilinear arrangement.

3. A pedal crank for bicycles, according to Claim 1, **characterized in that** said attachment portion extends according to a semicircumferential arrangement.

4. A pedal crank for bicycles, according to Claim 1, **characterized in that** said attachment portion is connected to said central drive on a part of said hub opposite to the gear assembly engaging a chain of said bicycle.

5. A pedal crank for bicycles, according to Claim 1, **characterized in that** from said attachment portion extends a rectilinear portion converging to said another portion of said elongated body.
